# EUROPÄISCHE PATENTANMELDUNG

(11) **EP 0 684 002 A1**
(43) Veröffentlichungstag der Anmeldung: **29.11.1995**
(21) Anmeldenummer: 95810315.2
(22) Anmeldetag: 10.05.1995
(51) Int. Cl.: A47J 41/02

(54) **Wärmeisolierende Flasche sowie Verfahren zu deren Herstellung**

(30) Priorität: 24.05.1994 CH 1590/94
(71) Anmelder: SIGG AG HAUSHALTGERÄTE, CH-8501 Frauenfeld (CH)
(72) Erfinder: Fritschi, Isidor, CH-8450 Andelfingen (CH)
(74) Vertreter: Felber, Josef

(57) **Zusammenfassung**

Die wärmeisolierende Flasche besteht aus zwei voneinander beabstandet ineinandergestellten Behältern (1,2) aus fliessgepresstem Aluminium. Der innere Behälter (1) bildet oben einen Flaschenhals, der mit dem äusseren Behälter (2) luftdicht verbunden ist. Die beiden Behälter (1,2) sind oben über ein schlecht wärmeleitendes Material (3), zum Beispiel Chromnickelstahl, luftdicht und stabil verbunden. Dabei wird das Verbindungsstück (3) aus Verbundplattiertem Chromnickelstahl-Aluminium-Laminat hergestellt, indem die Aluminiumschicht bis auf zwei Kragenränder (7,8) abgedreht wird, um die Verschweissung mit den Alu-Behältern (1,2) zu ermöglichen, während die verbleibende Chromnickelstahl-Schicht die mechanische Verbindung bildet, die schlecht wärmeleitend ist.

## Beschreibung

Die vorliegende Erfindung betrifft eine wärmeisolierende Flasche, die vorallem zur Benützung im Freien gedacht ist, sowie ein Verfahren zu deren Herstellung. Bekannt sind Thermosflaschen, die aus einer die Flüssigkeit aufnehmenden Flasche aus gut wärmeisolierendem Material oder aus doppelwandigem Glas bestehen, sowie einem diese Flasche als Schutz und Design-Mittel umschliessenden Mantel aus Kunststoff. Eine ebenfalls gute Isolationswirkung wird mit doppelwandigen Chromnickelstahl-Flaschen erzielt, denn Chromnickelstahl hat einen niedrigen Wärmeleitkoeffizienten von etwa 14 W/(mK) bei 20 °C. Die einzelnen Chromnickelstahl-Flaschen müssen herstellungsbedingt der Länge nach verschweisst werden. Zwei mit etwas Abstand voneinander ineinandergestellte solche Flaschen werden schliesslich oben miteinander verschweisst. Eine wesentliche Verbesserung der Isolationsfähigkeit erbringt das Evakuieren der Luft beziehungsweise des Gases zwischen den beiden ineinandergestellten Flaschen. Flaschen mit einer Doppelwand mit einem guten Vakuum im Zwischenraum erhöhen die Isolationswirkung um den Faktor 4 bis 8 im Vergleich zum unevakuierten Zustand. Um das Vakuum zu erzielen, werden die ineinandergestellten Flaschen in einer Vakuumkammer zusammengeschweisst, oder aber nachträglich wird über ein speziell eingebautes, in den Zwischenraum führendes Röhrchen das Gas im Hohlraum abgepumpt und das Röhrchen vakuumdicht verschweisst. Solche Flaschen weisen aber mehrere Nachteile auf. Zum einen sind sie relativ schwer, weil ja Chromnickelstahl eine Dichte von ca. 7,9 g/cm³ hat und weiter ist Chromnickelstahl als Material an und für sich teuer. Weiter kommt, dass die Herstellung, nämlich das Zusammenschweissen von Chromnickelstahl, relativ schwierig, aufwendig und teuer ist. An wärmeisolierende Flaschen werden heute zunehmend höhere Anforderungen gestellt. So sind im Out-Door-Bereich, zum Beispiel für Mountain-Biker, Bergsteiger, Skifahrer, Jäger und weitere Sportler und auch Berufsleute, die im Freien zu tun haben, wärmeisolierende Flaschen gewünscht, die es erlauben, eine genügende Portion Flüssigkeit über wenigstens einige Stunden zuverlässig auf einer üblichen Servier-Temperatur zu halten. Weiter sollen solche Flaschen nicht unnötig schwer und natürlich erschwinglich sein. Gerade die letzten beiden Anforderungen lassen sich mit den herkömmlichen Chromnickelstahl-Flaschen nur unbefriedigend erfüllen.

Es ist daher die Aufgabe der vorliegenden Erfindung, eine wärmeisolierende Flasche zu schaffen, die im Vergleich zu reinen Chromnickelstahl-Flaschen eine ähnliche Wärmeisolierfähigkeit besitzen, jedoch leichter und in der Herstellung einfacher und kostengünstiger sind. Weiter ist es die Aufgabe dieser Erfindung, ein Verfahren zur Herstellung solcher Flaschen anzugeben.

Diese Aufgabe wird gelöst von einer wärmeisolierende Flasche nach dem Oberbegriff des Patentanspruches 1, die sich durch die kennzeichnenden Merkmale dieses Patentanspruches 1 auszeichnet.

Das Verfahren zur Herstellung solcher wärmeisolierenden Flasche ist durch die Merkmale des Patentanspruches 8 gekennzeichnet.

Anhand der Figurenzeichnungen werden Beispiele einer solchen Flasche gezeigt und beschrieben. Das Verfahren zur Herstellung der Flaschen wird ebenfalls in der nachfolgenden Beschreibung erklärt und erläutert.

Es zeigt:
Figur 1 : Die beiden Aluminium-Behälter einer Flasche und das Verbindungsstück vor dem Zusammenbau in einem Längsschnitt;
Figur 2 : Die zusammengebaute Flasche mit Deckelteil in einem Längsschnitt;
Figur 3 : Die beiden Behälter einer Flasche, von denen der äussere aus Aluminium besteht, und der innere aus Chromnickelstahl, und das Verbindungsstück vor dem Zusammenbau in einem Längsschnitt;
Figur 4 : Den Deckelteil der zusammengebauten Flasche in einem Längsschnitt, vergrössert dargestellt.

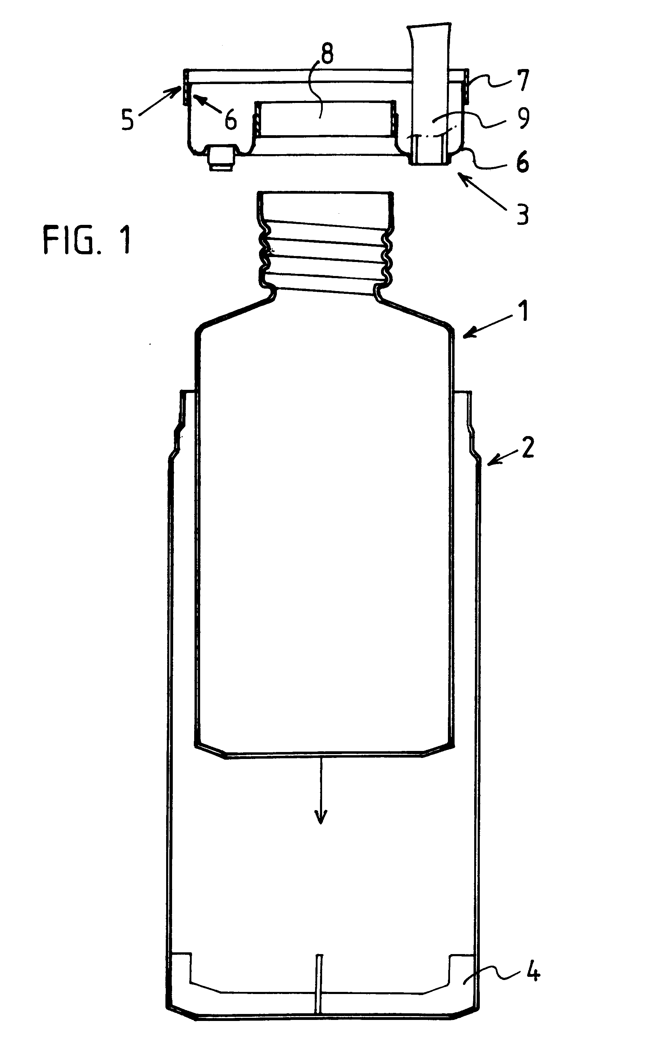

In Figur 1 sind die einzelnen erfindungsrelevanten Bestandteile der Flasche voneinander getrennt in einem Längsschnitt dargestellt. Die Flasche besteht aus einem inneren Behälter 1, welcher das eigentliche Fassungsvermögen der Flasche bestimmt, weiter aus einem äusseren Behälter 2 zur Schaffung eines Hohlraumes zwischen sich und der eigentlichen Flasche bzw. dem Behälter 1, sowie einem Verbindungsstück 3, mittels dessen die beiden Behälter 1,2 so fest und luftdicht miteinander verbindbar sind, dass der innere Behälter 1 im äusseren Behälter 2 unter allen Umständen des Gebrauchs unverrückbar gehalten ist. Zumindest der äussere Behälter 2 besteht nun bei der erfindungsgemässen wärmeisolierenden Flasche aus Aluminium, während der innere Behälter 1 wahlweise aus Aluminium oder Chromnickeltstahl besteht, zum Beispiel aus INOX-Stahl. In der hier gezeigten Variante bestehen beide Behälter 1 und 2 aus Aluminium. Dies mag überraschen, ist doch Aluminium mit einem Wärmeleitkoeffizienten von 209 W/(mK) bei 20 °C gerade als guter Wärmeleiter bekannt. Es weist in reiner Form etwa 57% der Wärmeleitfähigkeit von Kupfer auf. Aluminium kommt aber hier deshalb zum Zug, weil es im Vergleich etwa zu Chromnickelstahl sehr viel kostengünstiger ist und solche Behälter mittels eines Fliess-Pressverfahrens höchst einfach, enorm rasch und kostengünstig hergestellt werden können. Das Aluminium wird dabei kalt, aber mit grosser Presskraft in die gewünschte Form gepresst, das heisst infolge der grossen Presskraft "fliesst" es gewissermassen. Das Ziel der Erfindung ist es, diese Vorteile von Aluminium zu nutzen und trotz seiner hohen Wärmeleitfähigkeit den inneren Behälter 1 optimal vom äusseren 2 zu isolieren. Hierzu wird der innere Behälter 1 in den äusseren Behälter 2 hineingestellt, wie das der Pfeil unten am inneren Behälter 1 angibt. Am Boden des äusseren Behälters 2 kann sich ein Abstandhalter 4 aus wärmeisolierendem Material befinden, welcher dem inneren Behälter 1 dort einen stabilen Halt verleiht. Ein solcher Abstandhalter 4 kann zum Beispiel in Form eines Kreuzes aus zwei kreuzweise ineinandergestellten Stanzblechen aus Chromnikkelstahl bestehen, sodass der innere Behälter 2 bloss die Ränder der Chromnickelstahlbleche 4 berührt und so nur einen ganz geringen Wärmefluss zwischen den Böden der Aluminiumbehälter 1,2 erlaubt. Anstelle eines Kreuzes aus Chromnikkelstahlblechen kann aber auch ein Abstandhalter aus Kork oder aus einem anderen wärmeisolierenden Material, zum Beispiel aus Keramik, zum Einsatz kommen. Je nach Ausführung kann aber auch ganz auf diesen Abstandhalter verzichtet werden, insbesondere dann nämlich, wenn der Halt der inneren Flasche 1 durch deren obere Befestigung hinreichende Stabilität gewährleistet. Wesentlich ist nämlich gerade diese obere Verbindung zwischen den beiden Behältern 1,2 aus Aluminium. Während diese Verbindung eine hohe Stabilität sicherstellen soll und also den inneren Behälter 1 selbst im gefüllten Zustand sicher in seiner Position im äusseren Behälter 2 halten soll, wenn die Flasche zum Beispiel horizontal zu Boden fällt, soll diese Verbindung gleichzeitig so ausgeführt sein, dass sie nur einen minimalen Wärmefluss zwischen den beiden Behältern 1,2 zulässt. Dieses wird erreicht durch ein Verbindungsstück aus einem schlecht wärmeleitenden Material. Als solches bietet sich vorzugsweise Chromnickelstahl an, zum Beispiel INOX-Stahl nach DIN 1.4301. Das Problem besteht nun aber darin, wie Chromnickelstahl mit den Aluminiumbehältern 1,2 fest verbindbar ist. Bei der vorliegenden wärmeisolierenden Flasche wird dieses Problem dadurch gelöst, dass ein Verbindungsstück verwendet wird, das zunächst als Rohling aus einem Laminat aus Aluminium und Chromnikkelstahl besteht. Als Schichtdicken eignen sich für die Aluminium-Schicht ca. 0,75mm, während die INOX-Schicht ca. 0,35mm stark ausgeführt wird. Die Verbindung der beiden Materialien wird dabei mittels einer Verbund-Plattierung erzielt. Die beiden Materialien werden dabei in bekannter Weise auf einer hohen Temperatur von 150_{°}C bis 430 °C unter hohem Druck zusammengewalzt, sodass ihr Volumen auf etwa 80% schrumpft. Derartige Laminate werden in unterschiedlichen Ausführungen in vielen technischen Anwendungen eingesetzt und haben sich schon seit vielen Jahren bewährt. Sie sind im übrigen 100% vakuumsicher. Im vorliegenden Fall wird ein Laminat benötigt, welches eine Schicht Aluminium 5 und eine Schicht Chromnikkelstahl 6 aufweist. Dieses Laminat wird nun zu einem Verbindungsstück 3 verarbeitet. Zunächst wird das flache, verbundplattierte Laminat mittels Metalldrücken und/oder mittels eines Tiefzieh-Verfahrens in eine U-Ring-Form gebracht, wobei die Aluminiumschicht 5 aussen zu liegen kommt. Hernach wird die Aluminiumschicht 5 bis auf zwei Kragen 7,8 komplett entfernt. Dies kann mittels mechanischer Zerspanung, also durch Abdrehen oder Abfräsen erfolgen. In den Boden des U-Ringförmigen Verbindungsstückes 3 wird noch ein Röhrchen 9 luftdicht eingelötet oder eingeschweisst. Vorteilhaft wird dazu ein Kupferröhrchen 9 verwendet. Es wird in ein vorgebohrtes Loch im Boden des Verbindungsstückes 3 gesteckt und kann ohne weiteres mit dem Chromnickelstahl verlötet oder verschweisst werden. Auf der Innenseite des Verbindungsstückes 3 kann an der Aussenseite der Mündung der inneren Oeffnung die Chromnickelstahl-Schicht um einige Millimeter abgedreht werden, sodass die Aluminiumschicht dort freigelegt wird. Damit erhält die Flaschenmündung einen Rand oder Kragen 8 aus reinem Aluminium, was dessen Adaption für die Verwendung von verschiedenen Verschlussvarianten erleichtert. Das gleiche gilt für den äusseren Rand beziehungsweise den Kragen 7 des Verbindungsstückes. Dort wird die Chromnickelstahl-Schicht auf der Innenseite des Randes über einige Millimeter abgedreht, sodass ebenfalls ein reiner Aluminiumrand entsteht, welcher zum Anbau eines Verschlussdeckels leichter bearbeitbar ist.

Nachdem der innere Behälter 1 in den äusseren 2 gestellt wurde, wird das Verbindungsstück 3 zwischen den beiden Behälteröffnungen eingesetzt. Die Aluminiumbehälter 1,2 berühren dabei nur noch die Aluminiumkragen 7,8 am Verbindungsstück 3. Diese nunmehr reinen Aluminium-Verbindungen werden in bekannter Art verschweisst, zum Beispiel mittels eines Schmelz-Schweissverfahrens wie zum Beispiel Laser-Schweissen, Elektronenstrahl-oder Lichtbogenschweissen. Auf jeden Fall handelt es sich dabei nur um eine Aluminium-Verschweissung, wie sie in vielen Anwendungen schon lange zum Einsatz kommt. Nach erfolgter Verschweissung des Verbindungsstückes 3 mit den beiden Aluminiumbehältern 1,2 ist ein Hohlraum zwischen den beiden Behältern 1,2 entstanden. Ein Wärmefluss zwischen den beiden Aluminium-Behältern 1,2 erfolgt jetzt nur noch über die eingeschlossene Luft sowie über die Material-Brücke zwischen den Behältern, die nun jedoch ausschliesslich aus Chromnickelstahl besteht, das eine sehr geringe Wärmeleitfähigkeit aufweist, die um ca. den Faktor 15 mal geringer als jene von Aluminium ist.

In einem weiteren Schritt wird nun das Gas im Innern des entstandenen Hohlraumes evakuiert. Hierzu wird über das Kupfer-Röhrchen 9 mittels einer Vakuumpumpe das Gas abgesaugt, bis ein Isolationsvakuum von ca. 10-³ mbar erzielt ist. Das Kupfer-Röhrchen 9 wird dann mittels einer Kaltverschweissung vakuumdicht verschlossen, das heisst es wird mit grosser Kraft nahe am Boden des Verbindungsstückes 3 zusammengequetscht und abgeschert. Die Erfahrung zeigt, dass es bei Aluminium bei derart tiefen Drucken zu einer Ausgasung kommt, bei welcher Stoffe wie Stickstoff, Sauerstoff und Wasserstoff freigesetzt werden. Diese Ausgasung wird beschleunigt, wenn das Material auf eine Temperatur von ca. 200 °C gebracht wird. Diese ausgegasten Stoffe können mittels einer Absorptions-Tablette (in der Vakuumtechnik bekannt als Getter-Tablette), die zuvor in den Hohlraum zwischen den Behältern 1,2 eingelegt wird, weitgehend eingefangen beziehungsweise gebunden werden. Solche Absorptions-Tabletten sind in der Hoch-Vakuumtechnik bekannt und werden entweder durch Wärmeeinwirkung auf Temperaturen zwischen 300 °C und 400 _{°} C gebracht, auf denen sie wirksam werden, oder aber sie werden induktiv aktiviert. Auch die Ausgasung selbst wird durch das Erhitzen beschleunigt. Das Kristallgitter der Absorptionstablette ist dann in der Lage, N, O und H zu binden und aufzunehmen, sodass diese Stoffe auch nach Abkühlung der Absorptionstablette festgehalten werden und somit nicht mehr Wärme von einem Alu-Behälter 1 zum andern 2 transportieren können.

In einer anderen Variante für die Herstellung der Flasche kann das Zusammenschweissen der Behälter 1,2 mit dem Verbindungsstück 3 direkt in einer Vakuumkammer erfolgen, wodurch das nachträgliche Evakuieren des Gases aus dem Zwischenraum entfallen kann. Es ist dann auch kein Röhrchen 9 mehr nötig.

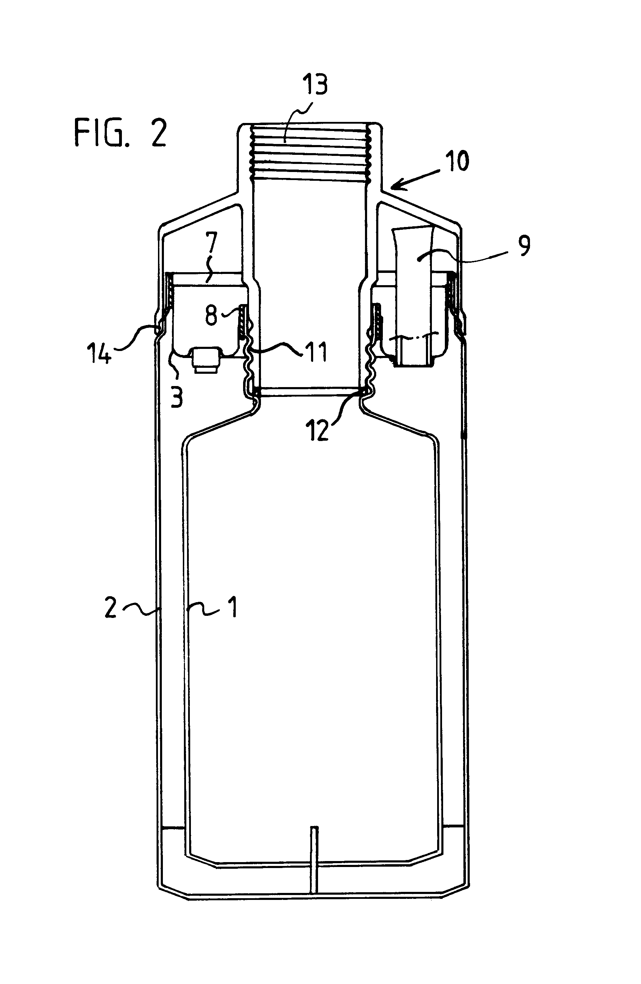

In Figur 2 ist eine fertig zusammengebaute wärmeisolierende Flasche in einem Längsschnitt gezeigt. Ueber den kaltverschweissten Stumpf des Kupfer-Röhrchens 9 ist ein Deckelteil 10 aus Kunststoff oder Metall geschraubt. Hierzu weist die Mündung des inneren Behälters 1 ein Innengewinde 11 auf, in welches das Aussengewinde unten am Deckelteil 10 passt. Zuunterst am Deckelteil 10 ist ein Dichtring 12 vorhanden, welcher diesen Dekkelteil 10 gegenüber dem Inneren des inneren Behälters 1 abdichtet. An der oberen Seite des Dekkelteils 10 ist ein Innengewinde 13 vorhanden. Dieses dient zum Verschrauben eines hier nicht dargestellten Verschluss-Zapfens aus schlecht wärmeisolierendem Material, welcher eingesetzt bis hinunter zum Dichtring 12 reicht, sodass die Flüssigkeit bei geschlossener Flasche vollständig und ausschliesslich von schlecht wärmeisolierendem Material umschlossen ist. Um auch auf der Aussenseite des Deckelteils 10 eine gute Abdichtung gegenüber dem äusseren Behälter 2 zu gewährleisten, ist ein Dichtring 14 zwischen dem unteren Rand des Deckelteils 10 und dem Kragen des äusseren Behälters 2 eingelegt. Damit ist sichergestellt, dass keine Feuchtigkeit in den Raum unter dem Deckelteil 10 gelangen kann und so auch keine Kondenswasserbildung darin möglich ist.

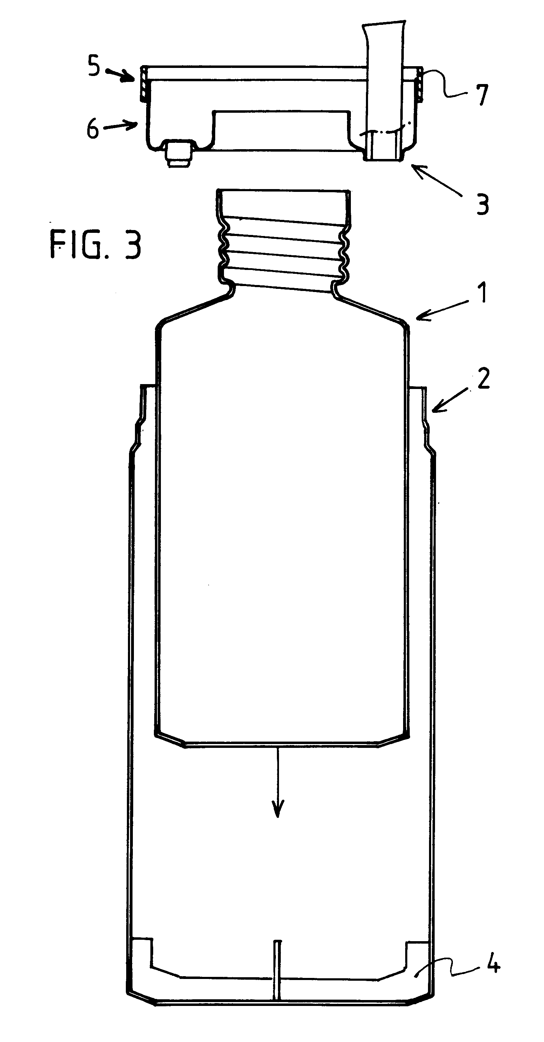

Die Figur 3 zeigt eine Ausführungsvariante, bei welcher der äussere Behälter 2 aus fliessgepresstem Aluminium besteht, um die schlagenden Vorteile der viel kostengünstigeren Herstellung und Verarbeitung von Aluminium zu nutzen, während der innere Behälter 1, der die Flüssigkeit aufnehmen muss, aus INOX-Stahl besteht. INOX als Innenmaterial hat nämlich bei den Kunden und Benützern einer solchen Flasche eine bessere Akzeptanz, weil INOX schon aus dem Küchenbereich für seine lebensmitteltechnischen Qualitäten sowie seine gute Reinigungsfähigkeit bekannt ist. In diesem Fall eines inneren Behälters 1 aus INOX-Stahl benötigt man am Verbindungsstück 3 natürlich auf der inneren Seite keinen Kragen aus Aluminium mehr, weil das Verbindungsstück 3 aus Chromnikkelstahl dort direkt mit dem INOX-Behälter 2 verschweisst werden kann. Am Verbindungsstück 3 aus zunächst verbundplattiertem Aluminium-Chromnickeltstahl entfernt man die Aluminiumschicht daher komplett bis auf den Kragen 7, der zum Verschweissen mit dem äusseren Behälter 1 aus Aluminium dient. Für die Herstellung des Verbindungsstückes 3 mag es möglich sein, Rohlinge in der gewünschten Form zu plattieren, welche dann bloss noch in die richtige Form gepresst werden müssen. Auf jeden Fall ist es möglich, ein Laminat in die richtige Form zu pressen, um hernach die nicht benötigte Aluminium-Schicht zu entfernen, indem man sie wegfräst oder abdreht.

Als Variante ist auch eine Herstellungsmethode denkbar, bei welcher das Verbindungsstück 3 aus schlecht wärmeleitendem Material mittels Verkleben luftdicht mit den Behältern verbunden wird. Dabei können die Behälter vorzugsweise aus Aluminium bestehen, oder der innere Behälter kann wahlweise aus INOX-Stahl gefertigt sein. Im Falle des Verklebens ist es natürlich nicht mehr unbedingt notwendig, ein Verbindungsstück aus einem Verbund-plattierten Laminat zu verwenden. Die Evakuierung des Gases im Zwischenraum zwischen den Behältern kann entweder dadurch erfolgen, dass die Verklebung direkt im Innern einer Vakuumkammer erfolgt, oder dass das Gas nachträglich über ein Röhrchen 9 evakuiert wird.

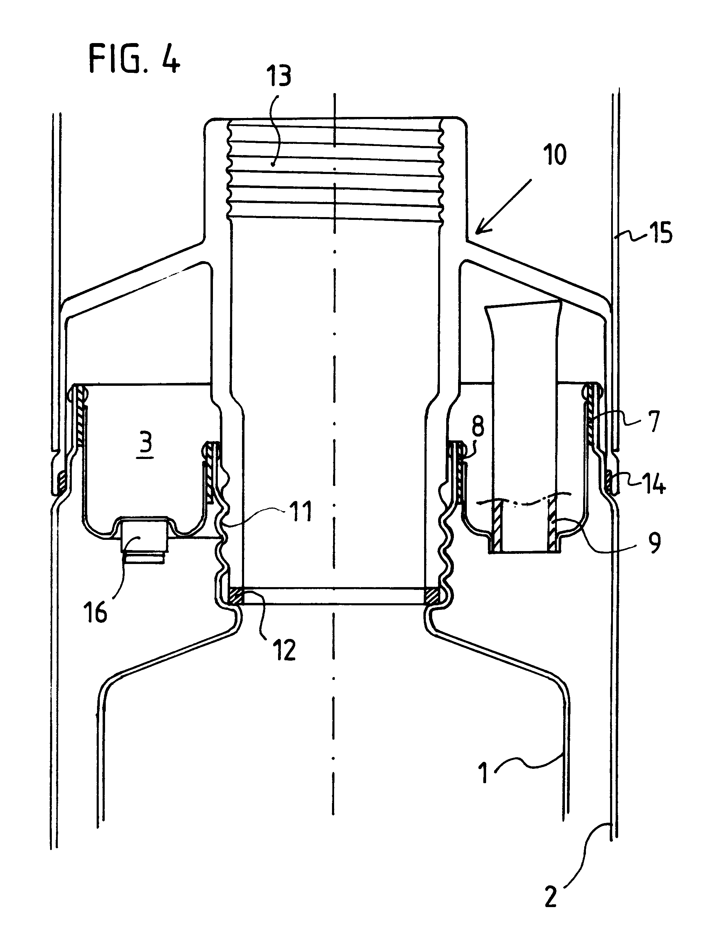

Die Figur 4 schliesslich zeigt den Deckelteil 10 und die Mündungen der beiden Behälter 1,2 sowie das Verbindungsstück 3 in einer vergrösserten Darstellung. Deutlich zu erkennen sind die beiden Kragen 7 und 8, bestehend je aus einem Stück einer zuvor aufplattierten Aluminiumschicht auf dem Verbindungsstück 3, das sonst nur noch aus Chromnickelstahl besteht. Diese beiden Kragen 7 und 8 sind mit dem inneren 1 beziehungsweise äusseren Behälter 2 verschweisst. Im gezeigten Beispiel wurde die Luft und das durch die Ausgasung der Oberflächen des Zwischenraumes entstandene Gas über ein Röhrchen 9 evakuiert, das hernach kaltverschweisst wurde. Die Ausgasung wird wie schon erwähnt unterstützt von einer sogenannten Getter-Tablette 16, welche als Restmolekül-Fänger wirkt und hier am Verbindungsstück 3 befestigt ist. Um den entstandenen Stumpf des Röhrchens 9 abzudecken und eine Flaschenmündung für einen geeigneten Verschluss zu bilden, ist ein Deckelteil 10 auf den inneren Behälter 1 aufgeschraubt. Hierzu hat der innere Behälter 1 im Mündungsbereich seines Halses ein Innengewinde 11. Unten ist ein Dichtring 12 eingelegt, der den Dekkelteil 10 gegenüber dem Flascheninhalt abdichtet. Auch aussen ist der Deckelteil 10 mit einem weiteren Dichtungsring 14 abgedichtet, wie das schon beschrieben wurde. In das Innengewinde 13 des Deckelteils 10 kann ein Verschlusszapfen aus einem geeigneten, schlecht wärmeleitenden Material eingesetzt werden, der dann bis hinunter zum Dichtring 12 reicht. Aussen über den Deckelteil 10 kann ein Abschlussdeckel 15 gestülpt sein, der gleichzeitig als Trinkbecher dienen kann.

Die vorliegende Flasche kann zu einem Bruchteil der Kosten einer herkömmlichen reinen INOX-Flasche für den gleichen Zweck hergestellt werden. Die Herstellkosten sind nämlich im Falle eines Innen- und Aussenbehälters aus Aluminium um mehr als den Faktor 10 geringer. Die fertige Flasche ist materialbedingt erheblich leichter als eine Chromnickelstahl-Flasche, was vorallem für Sportler interessant ist. Sie kann dank ihrer hohen Wärmeisolation gleichermassen an heissen Tagen für das Aufbewahren und Mitnehmen von kühlen Getränken wie umgekehrt bei kalter Witterung zum Mitnehmen von heissen Getränken oder Bouillons verwendet werden. Desweiteren bietet diese Flasche dank ihrer Aussenfläche aus Aluminium den Vorteil, dass sie leicht beschichtet oder siebbedruckt werden kann, was bei einer herkömmlichen Chromnickelstahl-Flasche nicht unbedingt der Fall ist. Weiter ist die Herstellung der benötigten Aluminiumbehälter sehr effizient, indem mittels des angewandten Fliess-Pressverfahrens die Herstellung eines Behälters in Sekundenbruchteilen vollzogen ist.

## Patentansprüche

1. Wärmeisolierende Flasche aus zwei voneinander beabstandet ineinandergestellten Behältern (1,2), wobei wenigstens der äussere Behälter (2) aus Aluminium besteht und der innere Behälter (1) oben einen Flaschenhals bildet, der mit dem äusseren Behälter (2) luftdicht verbunden ist, indem er oben über ein schlecht wärmeleitendes Material (3) luftdicht und stabil mit dem äusseren Behälter (2) verbunden ist, dadurch gekennzeichnet, dass die Verbindung der beiden Behälter (1,2) aus einem durch Verbund-Plattierung hergestellten Verbindungsstück (3) besteht, das aus einer Aluminiumschicht (5) und einer schlecht wärmeleitenden Schicht (6) besteht, wobei die Aluminiumschicht (5) über die Verbindungsstrecke hinweg entfernt ist und nur dort ein Kragen (7) an seinen äusseren Rändern verbleibt, wo es mit einem Behälter aus Aluminium luftdicht verschweisst ist, während im Falle eines inneren Behälters aus demselben schlecht wärmeleitenden Material wie das Verbindungsstück dieses direkt mit ihm verschweisst oder verlötet ist.

2. Wärmeisolierende Flasche nach Anspruch 1, dadurch gekennzeichnet, dass beide Behälter (1,2) aus Aluminium bestehen und oben über ein schlecht wärmeleitendes Material (3) luftdicht und stabil miteinander verbunden sind.

3. Wärmeisolierende Flasche nach einem der vorhergehenden Ansprüche, dadurch gekennzeichnet, dass die schlecht wärmeleitende Schicht am Verbindungsstück (3) Chromnickelstahl ist.

4. Wärmeisolierende Flasche nach Anspruch 1, dadurch gekennzeichnet, dass sowohl die schlecht wärmeleitende Schicht am Verbindungsstück (3) wie auch der innere Behälter (1) aus Chromnickelstahl sind.

5. Wärmeisolierende Flasche nach einem der vorhergehenden Ansprüche, dadurch gekennzeichnet, dass die Flasche einen runden Querschnitt aufweist, das Verbindungsstück (3) aus Chromnickelstahl besteht und die allgemeine Form eines U-Ringes aufweist, dessen äusserer Randabschluss gegen das Ringäussere hin einen Aluminiumkragen (7) aufweist, der mit dem äusseren Aluminium-Behälter (2) luftdicht verschweisst oder verlötet ist, während der innere Rand des Verbindungsstückes (3) im Falle eines inneren Behälters (1) aus Chromnickelstahl direkt oder im Falle eines inneren Behälters (1) aus Aluminium über einen Aluminiumkragen (8) am Verbindungsstück luftdicht mit dem inneren Behälter (1) verschweisst oder verlötet ist.

6. Wärmeisolierende Flasche nach einem der vorhergehenden Ansprüche, dadurch gekennzeichnet, dass der innere Behälter (1) im Mündungsbereich seines Halses ein Innengewinde (11) aufweist, in das ein Deckelteil (10) eingeschraubt ist, welcher mittels Dichtungsringen (12,14) gegenüber den beiden Behältern (1,2) abgedichtet ist und selbst ein Innengewinde (13) aufweist, in welches ein zugehöriger Verschlusszapfens aus schlecht wärmeleitendem Material einpasst.

7. Wärmeisolierende Flasche nach einem der vorhergehenden Ansprüche, dadurch gekennzeichnet, dass im freibleibenden Teil des Verbindungsstückes (3) ein Röhrchen (9) vakuumdicht eingelötet ist und aussen verschlossen ist, durch welches das Gas zwischen den ineinandergestellten und mit dem Verbindungsstück (3) verbundenen Behältern (1,2) evakuierbar war.

8. Verfahren zur Herstellung einer wärmeisolierenden Flasche nach einem der Ansprüche 1 bis 7, dadurch gekennzeichnet, dass
a) zwei oben offene Behälter (1,2) - wahlweise unter Einschluss einer Absorber-Tablette (16) - ineinandergestellt werden, wobei wenigstens der äussere Behälter aus kalt fliessgepresstem oder tiefgezogenem Aluminium besteht und der innere Behälter (1) oben einen Flaschenhals bildet,
b) die beiden Behälter (1,2) oben mit einem Verbindungsstück (3) verschweisst oder verlötet werden, das aus einem verbundplattierten Laminat besteht und eine Schicht Aluminium (5) und eine Schicht (6) aus einem dagegen schlecht wärmeisolierenden Material aufweist, wobei das Verbindungsstück (3) über die Verbindungsstrecke ausschliesslich aus dem schlecht wärmeleitfähigen Material besteht, indem dort die Aluminiumschicht (5) zuvor entfernt wird, und das aufplattierte Aluminium (7,8) somit nur an jenen Rändern stehengelassen wird, die mit dem aus Aluminium bestehenden äusseren Behälter (2), oder, wenn beide Behälter (1,2) aus Aluminium bestehen, mit den beiden Behältern (1,2), zu verbinden sind,
c) das im Zwischenraum zwischen den beiden Behältern (1,2) befindliche Gas über ein in das Verbindungsstück (3) vakuumdicht eingelötetes Metall-Röhrchen (9) evakuiert wird,
d) das Metall-Röhrchen (9) mittels Kaltschweissung verschlossen wird.

9. Verfahren zur Herstellung einer wärmeisolierenden Flasche nach einem der Ansprüche 1 bis 6, dadurch gekennzeichnet, dass
a) zwei oben offene Behälter (1,2) - wahlweise unter Einschluss einer Absorber-Tablette (16) - ineinandergestellt werden, wobei wenigstens der äussere Behälter aus kalt fliessgepresstem oder tiefgezogenem Aluminium besteht und der innere (1) oben einen Flaschenhals bildet,
b) die beiden Behälter (1,2) oben in einer Vakuumkammer mit einem Verbindungsstück (3) verschweisst oder verlötet werden, das aus einem verbundplattierten Laminat besteht und eine Schicht Aluminium (5) und eine Schicht (6) aus einem dagegen schlecht wärmeisolierenden Material aufweist, wobei das Verbindungsstück (3) über die Verbindungsstrecke ausschliesslich aus dem schlecht wärmeleitfähigen Material besteht, indem dort die Aluminiumschicht (5) zuvor entfernt wird, und das aufplattierte Aluminium (7,8) somit nur an jenen Rändern stehengelassen wird, die mit dem aus Aluminium bestehenden äusseren Behälter (2), oder, wenn beide Behälter (1,2) aus Aluminium bestehen, mit den beiden Behältern (1,2), zu verbinden sind.

10. Verfahren nach einem der Ansprüche 8 bis 9, dadurch gekennzeichnet, dass nach dem Zusammenbau der Flasche und bei erstelltem Vakuum im Zwischenraum zwischen den Behältern (1,2) die durch die Ausgasung der Innenschichten freiwerdenden Stoffe wie Stickstoff, Sauerstoff und Wasserstoff von einer im Zwischenraum zwischen den Behältern (1,2) eingelegten Absorber-Tablette (16) unter Wärmeeinwirkung bei 300 °C bis 400 _{°} C eingefangen und in deren Kristallgitter eingebaut werden und damit die Qualität des Vakuums verbessert wird.
